# FASCICULE DE BREVET EUROPEEN

(11) **EP 4 575 848 B1**
(45) Date de publication et mention de la délivrance du brevet: **28.10.2026**
(21) Numéro de dépôt: 24202751.4
(22) Date de dépôt: 26.09.2024
(51) Int. Cl.: G06F 21/32, H04L 9/40

(54) **PROCÉDÉ DE CONTRÔLE D'ACCÈS À UN SITE WEB**
VERFAHREN ZUR ZUGRIFFSKONTROLLE AUF EINE WEBSITE
METHOD FOR CONTROLLING ACCESS TO A WEBSITE

(30) Priorité: 18.12.2023 FR 2314357
(43) Date de publication de la demande: 25.06.2025
(73) Titulaire: IDEMIA Public Security France, 92400 Courbevoie (FR)
(72) Inventeur: CHABANNE, Hervé, 92400 COURBEVOIE (FR); BOUATOU, Vincent, 92400 Courbevoie (FR)
(74) Mandataire: IPS

(56) Documents cités:
- WO-A1-2021/030634
- US-A1- 2018 176 017
- US-A1- 2021 336 801

## Description

### DOMAINE DE L'INVENTION

La présente invention concerne un procédé de contrôle d'accès à un site.

### ETAT DE LA TECHNIQUE

Certains sites internet ont un contenu ou fournissent des services auxquels certaines catégories d'utilisateurs ne sont pas censées avoir accès. Par exemple, des mineurs ne sont pas censés accéder à des sites dont le contenu est réservé aux adultes.

Certains sites internet pour adultes invitent les internautes à confirmer qu'ils sont majeurs, en cliquant sur un bouton à cet effet.

Cette protection n'est pas satisfaisante, car n'empêche pas un mineur motivé d'accéder au contenu pour adulte en cliquant quand même sur ce bouton.

WO 2021/030634 A1 et US 2021/336801 constituent l'état de la technique pertinent.

### EXPOSE DE L'INVENTION

L'étendue de l'invention est définie par les revendications indépendantes.

Un but de l'invention est de contrôler de manière plus sécurisée l'accès à un site auquel seule une catégorie de personnes a le droit d'accéder.

Ce but est atteint par un premier procédé de contrôle d'accès à un site ou par un deuxième procédé de contrôle d'accès à un site constituant une alternative au premier procédé. Les deux procédés sont mis en œuvre par ordinateur.

Le premier procédé comprend :
- une phase d'enrôlement comprenant des étapes de :
   - obtention de données d'enrôlement comprenant :
      - une image d'enrôlement montrant un individu à enrôler,
      - une image de référence montrant:
         - une photographie se trouvant sur un document d'identité, la photographie montrant un individu de référence,
         - des informations se trouvant sur le document d'identité et se rapportant à l'individu de référence,
   - vérification d'une correspondance entre l'individu à enrôler et l'individu de référence à partir de l'image d'enrôlement et de l'image de référence,
   - analyse des informations montrées dans l'image de référence, de sorte à déterminer si les informations satisfont ou non une condition d'accès au site,
   - application d'une fonction de hachage à l'image d'enrôlement de sorte à produire un condensat d'enrôlement,
   - signature numérique du condensat d'enrôlement à l'aide d'une clé privée, de sorte à produire un condensat d'enrôlement signé,
   - mise en œuvre de mesures en vue d'une communication du condensat d'enrôlement signé à un émetteur des données d'enrôlement,
   - dans lequel au moins une étape parmi l'application de la fonction de hachage, la signature numérique et la mise en œuvre des mesures est réalisée seulement si les conditions suivantes sont réunies :
      - la vérification révèle que l'individu à enrôler et l'individu de référence correspondent, et
      - l'analyse révèle que les informations satisfont la condition d'accès au site,
- une phase de contrôle comprenant des étapes de :
   - obtention de données d'épreuve comprenant :
      - une image d'épreuve montrant un individu à contrôler, et
      - un condensat d'épreuve signé,
   - à l'aide d'une clé publique formant une paire de clés asymétriques avec la clé privée, vérification de signature du condensat d'épreuve signé,
   - application de la fonction de hachage à l'image d'épreuve de sorte à produire un autre condensat d'épreuve,
   - vérification d'une correspondance entre le condensat d'épreuve signé et l'autre condensat d'épreuve,
   - génération d'un résultat de contrôle indiquant que :
      - un émetteur des données d'épreuve a le droit d'accéder au site, seulement si les conditions suivantes sont réunies :
         - la vérification de signature révèle que le condensat d'épreuve signé a été signé avec la clé privée,
         - la vérification de correspondance révèle que le condensat d'épreuve signé et l'autre condensat d'épreuve correspondent,
      - l'émetteur des données d'épreuve n'a pas le droit d'accéder au site sinon.

Dans le premier procédé, le condensat d'enrôlement signé constitue une preuve du fait que l'individu à enrôler satisfait bien la condition d'accès au site. En particulier, le fait que ce condensat a été signé par une clé privée permet de certifier ce condensat a bien été produit lors de la phase d'enrôlement, par une autorité de confiance agréée.

Si l'individu à contrôler lors de la phase de contrôle (montré dans l'image d'épreuve) est un individu ayant préalablement été enrôlé lors de la phase d'enrôlement, cela implique que cet individu dispose normalement d'un condensat d'enrôlement signé généré à partir d'une image qui montre ce même individu (l'image d'enrôlement). Cet individu peut ainsi fournir son condensat d'enrôlement signé en tant que condensat d'épreuve signé. Comme la phase de contrôle réutilise la même fonction de hachage que celle utilisée lors de la phase d'enrôlement, ainsi qu'une clé publique qui forme une paire de clés asymétriques avec la clé privée utilisée pour la signature du condensat d'enrôlement, on peut déduire que le condensat d'épreuve signé est le condensat d'enrôlement signé. Ainsi, un utilisateur qui a passé avec succès la phase d'enrôlement se voit logiquement accorder un accès au site. Il est difficile pour un attaquant ne remplissant pas la condition d'accès de tromper le procédé proposé. En effet, l'attaquant doit passer avec succès la phase d'enrôlement et la phase de contrôle, ce qui suppose de mettre la main sur le document d'identité d'un tiers remplissant la condition d'accès et de trouver également une photographie du même tiers.

Un avantage du premier procédé proposé réside dans le fait que le document d'identité n'est utilisé que dans la phase d'enrôlement et pas dans la phase de contrôle. Cette séparation permet au procédé d'être mis en œuvre sans que le document d'identité ne soit fourni à l'entité qui réalisé la phase de contrôle. Par ailleurs, le document d'identité n'est utilisé qu'une seule fois à l'enrôlement ; la phase de contrôle peut ensuite être réalisée plusieurs fois pour le même utilisateur à contrôle, sans que celui-ci n'ait à fournir son document d'identité. En fait, l'image d'enrôlement est utilisée dans le premier procédé comme une sorte de document d'identité provisoire, le condensat d'enrôlement signé permettant d'attester que l'individu dont le visage figure dans l'image d'enrôlement, rempli la condition d'accès requise.

Le deuxième procédé comprend :
- une phase d'enrôlement comprenant des étapes de :
   - obtention de données d'enrôlement comprenant :
      - une image d'enrôlement montrant un individu à enrôler,
      - une image de référence montrant:
         - une photographie se trouvant sur un document d'identité, la photographie montrant un individu de référence,
         - des informations se trouvant sur le document d'identité et se rapportant à l'individu de référence,
   - vérification d'une correspondance entre l'individu à enrôler et l'individu de référence à partir de l'image d'enrôlement et de l'image de référence,
   - génération d'un attribut d'enrôlement qui contient les informations montrées dans l'image de référence,
   - application d'une fonction de hachage à l'image d'enrôlement de sorte à produire un condensat d'enrôlement,
   - signature numérique du condensat d'enrôlement à l'aide d'une clé privée, de sorte à produire un condensat d'enrôlement signé,
   - marquage de l'attribut d'enrôlement à l'aide d'une clé de marquage, de sorte à produire un attribut d'enrôlement marqué,
   - mise en œuvre de mesures en vue d'une communication du condensat d'enrôlement signé et de l'attribut à un émetteur des données d'enrôlement,
   - dans lequel au moins une étape parmi la génération de l'attribut d'enrôlement, l'application de la fonction de hachage, la signature numérique, le marquage et la mise en œuvre des mesures est réalisée seulement si l'individu à enrôler et l'individu de référence correspondent,
- une phase de contrôle comprenant des étapes de :
   - obtention de données d'épreuve comprenant :
      - une image d'épreuve montrant un individu à contrôler, et
      - un condensat d'épreuve signé,
      - un attribut d'épreuve marqué,
   - à l'aide d'une clé publique formant une paire de clés asymétriques avec la clé privée, vérification de signature du condensat d'épreuve signé,
   - application à l'attribut d'épreuve marqué d'un traitement complémentaire au marquage permettant de déduire si l'attribut d'épreuve marqué a été marqué à l'aide de la clé de marquage ou non,
   - application de la fonction de hachage à l'image d'épreuve de sorte à produire un autre condensat d'épreuve,
   - vérification d'une correspondance entre le condensat d'épreuve signé et l'autre condensat d'épreuve,
   - vérification de l'attribut d'épreuve marqué, de sorte à déterminer si l'attribut d'épreuve marqué contient des informations qui satisfont ou non une condition d'accès au site,
   - génération d'un résultat de contrôle indiquant que :
      - un émetteur des données d'épreuve a le droit d'accéder au site, seulement si les conditions suivantes sont réunies :
         - la vérification de signature révèle que le condensat d'épreuve signé a été signé avec la clé privée,
         - le traitement complémentaire révèle que l'attribut d'épreuve marqué a été marqué à l'aide de la clé de marquage,
         - la vérification de l'attribut d'épreuve marqué révèle que l'attribut d'épreuve marqué contient des informations qui satisfont la condition d'accès au site, et
         - la vérification de correspondance révèle que le condensat d'épreuve signé et l'autre condensat d'épreuve correspondent,
      - l'émetteur des données d'épreuve n'a pas le droit d'accéder au site sinon.

Le deuxième procédé diffère du premier procédé par le fait que la condition d'accès au site est évaluée non pas lors de la phase d'enrôlement, mais lors de la phase de contrôle. Ce deuxième procédé a pour avantage une certaine flexibilité. En effet, à l'issue de la phase d'enrôlement, différentes phases de contrôles peuvent être mises en œuvre pour différents sites imposant des conditions d'accès différentes.

Le premier procédé ou le deuxième procédé peuvent en outre comprendre les caractéristiques optionnelles suivantes, prises seules ou en combinaison lorsque cela est techniquement possible.

Dans un mode de réalisation, le marquage est un chiffrement et le traitement complémentaire est un déchiffrement. Dans un autre mode de réalisation, le marquage est une signature numérique et le traitement complémentaire est une vérification de signature numérique.

Optionnellement, le hachage est un hachage perceptuel.

Optionnellement, les mesures comprennent la génération d'un code-barres d'enrôlement représentant le condensat d'enrôlement signé.

Optionnellement, les données d'épreuve comprennent une vidéo d'épreuve, et la phase de contrôle comprend les étapes suivantes : vérification de présence d'un individu vivant dans la vidéo d'épreuve, et si un individu vivant est présent dans la vidéo d'épreuve, obtention de l'image d'épreuve à partir de la vidéo d'épreuve.

Optionnellement, la phase de contrôle comprend une vérification d'une correspondance entre l'individu vivant et l'individu à contrôler à partir de l'image d'épreuve, dans lequel le résultat de contrôle généré indique que l'émetteur des données d'épreuve n'a pas le droit d'accéder au site si l'individu vivant et l'individu à contrôler ne correspondent pas.

Optionnellement, la phase de contrôle comprend en outre une étape de détection dans la vidéo d'épreuve d'un code-barres d'épreuve représentant le condensat d'épreuve signé.

Optionnellement, la phase de contrôle est mise en œuvre par un serveur de contrôle, et si le résultat de contrôle indique que l'émetteur des données d'épreuve a le droit d'accéder au site, le résultat de contrôle est transmis à un serveur d'accès au site distinct du serveur de contrôle, de sorte que le serveur d'accès au site accepte une demande d'accès au site émanant de l'émetteur des données d'épreuves.

Optionnellement, les données d'épreuve sont obtenues par le serveur de contrôle sans passer par le serveur d'accès.

Optionnellement, la phase de contrôle comprend les étapes suivantes :
- hachage d'une donnée dépendant du condensat d'épreuve signé et d'une valeur de variable, de sorte à produire une empreinte,
- envoi de l'empreinte au serveur d'accès au site ;
- réception d'une donnée de défi générée par le serveur d'accès au site à partir de l'empreinte,
- détermination du fait que la donnée de défi satisfait une condition de validité ou non,
- si la donnée de défi satisfait la condition de validité, signature numérique de la donnée de défi à l'aide d'une deuxième clé privée, de sorte à produire une donnée de défi signée,
- Si le résultat de contrôle indique que l'émetteur des données d'épreuve a le droit d'accéder au site, envoi de la donnée de défi signée au serveur d'accès, le serveur d'accès étant configuré pour :
   - vérifier la validité de la donnée de défi signée à l'aide d'une deuxième clé publique, la deuxième clé privée et la deuxième clé publique formant une deuxième paire de clés asymétriques,
   - si la donnée de défi signée se révèle être valide, acceptation d'une demande d'accès au site émanant de l'émetteur des données d'épreuve.

Optionnellement, la variable est une variable temporelle.

Optionnellement, le serveur d'accès est configuré pour générer la donnée de défi par application d'une fonction aléatoire vérifiable à l'empreinte.

Optionnellement, la condition d'accès au site comprend une condition d'âge, par exemple une condition de majorité.

Un autre objet de la présente divulgation est un produit programme d'ordinateur comprenant des instructions de code de programme pour l'exécution des étapes du premier procédé ou du deuxième procédé, lorsque ce programme est exécuté par au moins un processeur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un dispositif client, un site, et des serveurs servant à contrôler un accès au site par le dispositif client.
La figure 2 est un organigramme d'étapes d'une phase d'enrôlement selon un premier mode de réalisation.
La figure 3 représente schématiquement des données d'enrôlement selon un mode de réalisation.
La figure 4 est un organigramme d'étapes d'une phase de contrôle selon un premier mode de réalisation.
La figure 5 représente schématiquement des données d'épreuve selon un mode de réalisation.
La figure 6 est un organigramme d'étapes optionnelles d'une phase de contrôle selon le premier mode de réalisation.
La figure 7 est un organigramme d'étapes d'une phase d'enrôlement selon un deuxième mode de réalisation.
La figure 8 est un organigramme d'étapes optionnelles d'une phase de contrôle selon le deuxième mode de réalisation.

Sur l'ensemble des figures, les éléments similaires portent des références identiques.

### DESCRIPTION DETAILLEE DE L'INVENTION

### 1) Système

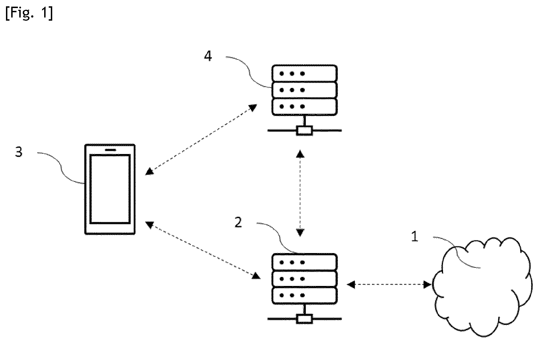

On a représenté sur la figure 1 un site 1, un serveur d'accès 2 au site 1, un dispositif client 3 (plus simplement appelé « client 3 » dans la suite), et un serveur de contrôle 4.

Dans ce qui suit on supposera que le site 1 est un site internet, étant entendu que le site 1 peut être un site physique.

Le serveur d'accès 2 comprend une interface de communication pour communiquer avec le client 3 et avec le serveur de contrôle 4 via un réseau ou plusieurs réseaux différents. L'interface de communication est de type quelconque, filaire (Ethernet) ou radio sans fil (Wi-Fi, Bluetooth, cellulaire, etc.).

Le serveur d'accès 2 au site comprend en outre un processeur configuré pour mettre en œuvre des étapes qui seront décrites dans la suite. Le processeur peut comprendre un cœur ou plusieurs cœurs (pour exécuter différentes tâches simultanément). Le processeur peut être de n'importe quel type : CPU, GPU, circuit programmable (FPGA) ou non (ASIC).

Le serveur d'accès 2 au site comprend en outre une mémoire mémorisant un programme comprenant des instructions de code exécutable par le processeur. Les étapes précitées sont mises en œuvre lorsque ce programme est exécuté par le processeur. La mémoire est de n'importe que type : volatile (RAM) ou non volatile (flash, HDD, SSD, EEPROM, etc).

En particulier, le serveur d'accès 2 peut héberger le site internet 1, c'est-à-dire que les pages du site internet peuvent être mémorisées dans la mémoire du serveur d'accès 2, et le programme exécuté par le processeur du serveur d'accès 2 peut comprendre le code du site internet.

Le client 3 est un terminal utilisateur susceptible de demander au serveur d'accès 2 un accès au site internet 1. Il est quelconque (ordinateur fixe, ordinateur portable, tablette, smartphone, etc.). Le client 3 comprend une caméra.

Le site internet 1 n'est pas en accès libre. Par ceci, on veut dire que le site internet 1 comprend au moins une page dont l'accès par un utilisateur du dispositif client 3 est conditionné au respect d'une condition d'accès prédéfinie.

Dans ce qui suit, on décrira un mode de réalisation non limitatif dans lequel la condition d'accès au site comprend une condition d'âge, étant entendu que des conditions alternatives ou complémentaires sont envisageables (par exemple une condition d'adresse, de genre, de nationalité, etc.). Par exemple, une page du site 1 comprend du contenu réservé aux adultes ; dans ce contexte, l'utilisateur du dispositif client 3 ne devrait pouvoir accéder à cette page que s'il est majeur (la majorité étant par exemple de 18 ans en France).

Une fonction assurée par le serveur d'accès 2 est de faire respecter la condition d'accès au site 1, en acceptant ou refusant des demandes d'accès au site, selon que cette condition est remplie ou non.

Le serveur de contrôle 4 a pour fonction d'évaluer si la condition d'accès au site est remplie ou non par un utilisateur, de sorte que le serveur d'accès 2 puisse prendre les mesures appropriées (acceptation ou refus d'une demande d'accès).

Le serveur de contrôle 4 comprend une interface de communication pour communiquer avec le serveur d'accès 2 au site par un réseau. Les informations fournies ci-dessus sur l'interface de communication du serveur d'accès 2 sont applicables à l'interface de communication du serveur de contrôle 4.

Le serveur de contrôle 4 comprend en outre un processeur configuré pour mettre en œuvre des étapes qui seront décrites dans la suite. Les informations fournies ci-dessus sur le processeur du serveur d'accès 2 sont applicables au processeur du serveur de contrôle 4.

Le serveur de contrôle 4 comprend en outre une mémoire mémorisant un programme comprenant des instructions de code exécutable par le processeur. Les étapes précitées sont mises en œuvre lorsque ce programme est exécuté par le processeur. Les informations fournies ci-dessus sur la mémoire du serveur d'accès 2 sont applicables au processeur du serveur de contrôle 4.

Le mémoire du serveur de contrôle 4 mémorise une fonction de hachage F.

De préférence, la fonction de hachage F est une fonction de hachage perceptuel. Le hachage perceptuel a la propriété avantageuse suivante : deux images similaires faisant l'objet de la même fonction de hachage perceptuel conduisent à deux condensats de valeurs proches, tandis que deux images très différentes faisant l'objet de la même fonction de hachage perceptuel conduisent à deux condensats de valeurs éloignées l'une de l'autre.

Le mémoire du serveur de contrôle 4 mémorise par ailleurs une clé privée SK et une clé publique PK formant ensemble une paire de clés asymétriques. Comme on le verra par la suite, une fonction assurée par la clé privée SK est de signer des données, de sorte à certifier que ces données ont été enrôlées par le serveur de contrôle. Une fonction assurée par la clé publique PK est de vérifier si des données ont été signées par le serveur de contrôle à l'aide de sa clé privée SK.

### 2) Procédé de contrôle d'accès (premier mode de réalisation)

On va maintenant décrire un procédé mis en œuvre par le serveur de contrôle 4, en collaboration avec le serveur d'accès 2 au site pour contrôler un accès au site 1 demandé par le client 3.

Il sera question dans ce qui suit d'envoi de données entre le client 3, le serveur d'accès 2 et le serveur de contrôle 4. Sauf mention explicite contraire, ces envois sont des envois par réseau, réalisés au moyen des interface de communications respectifs de ces dispositifs.

Il sera également question de traitements réalisés par le serveur d'accès 2 et le serveur de contrôle 4. Il est entendu que ces traitements sont implicitement mis en œuvre par les processeurs respectifs de ces dispositifs.

Le procédé comprend deux phases : une phase d'enrôlement et une phase de contrôle.

### a) Phase d'enrôlement

On suppose que le serveur de contrôle 4 détecte qu'un utilisateur du client 3 demande à être enrôlé auprès de lui.

On va ci-après décrire un mode de réalisation de la phase d'enrôlement dans lequel le client 3 et le serveur de contrôle 4 communiquent par réseau, via leurs interfaces de communication respectives. Dans ce mode de réalisation, le serveur de contrôle 4 détecte une requête d'enrôlement émise par le client 3 via son interface de communication réseau.

Le serveur de contrôle 4 invite le client 3 à lui fournir des données d'enrôlement par un message approprié. Les données d'enrôlement attendues comprennent deux images que l'on appelle par convention « image d'enrôlement » et « image de référence » dans la présente divulgation.

Plus précisément, le serveur de contrôle 4 invite le client 3 à lui fournir :
- une image d'enrôlement montrant l'individu à enrôler (typiquement l'utilisateur du client 3),
- une image de référence montrant un document d'identité de cet individu à enrôler, de telle sorte que l'image de référence montre une photographie de l'individu à enrôler qui se trouve sur le document d'identité, et également des informations à partir desquelles il peut être déduit si l'utilisateur à enrôler satisfait la condition d'accès.

Dans notre exemple non limitatif d'une condition d'accès fondée sur l'âge de l'utilisateur, les informations attendues comprennent typiquement une date de naissance.

Dans une étape 100, le serveur de contrôle 4 reçoit des données d'enrôlement émanant du client 3 qui sont censées avoir le contenu qui précède.

Dans un mode de réalisation, l'image de référence et l'image d'enrôlement sont acquises par la caméra du client 3. En particulier, l'image d'enrôlement peut montrer une photographie présentée sur un support physique (par exemple du papier ou un écran d'affichage), cette photographie montrant elle-même l'individu à enrôler. Cette photographie peut être distincte de la photographie du document d'identité.

Dans un autre mode de réalisation, l'image d'enrôlement et l'image de référence sont des images numériques stockées dans une mémoire du client 3, et ces images numériques sont téléversés vers le serveur de contrôle 4 à l'initiative de l'utilisateur du client 3, via l'interface de communication du client.

Dans l'étape 100, le serveur de contrôle 4 peut vérifier que les données d'enrôlement ont bien le contenu attendu. Dans la négative, le processeur met fin à la phase d'enrôlement, par exemple en retournant au le client 3 un résultat « KO » indiquant que l'enrôlement a échoué. Dans la positive, le processeur passe à l'étape 102.

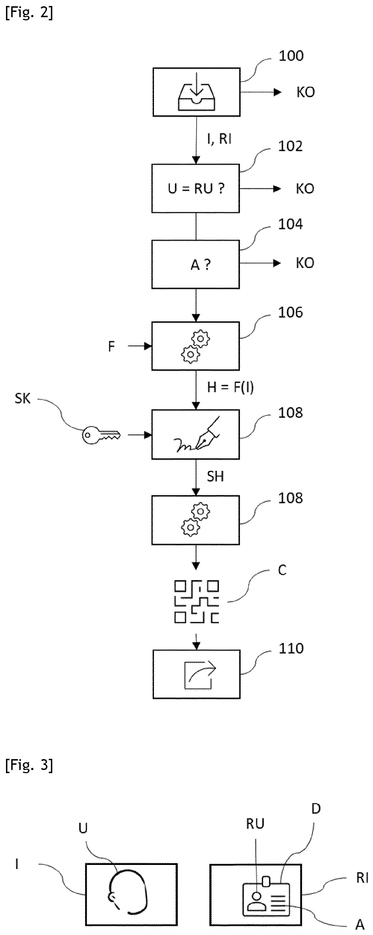

On a représenté sur la figure 3 des données d'enrôlement ayant le format attendu par le serveur de contrôle 4. Ces données d'enrôlement comprennent :
- une image d'enrôlement I montrant un individu U que l'on appelle par convention « individu à enrôler »,
- une image de référence RI montrant:
   ∘ une photographie se trouvant sur un document d'identité D, la photographie montrant un individu RU que l'on appelle par convention « individu de référence »,
   ∘ des informations A se trouvant également sur le document d'identité, ces informations A se rapportant à l'individu de référence RU.

Le document d'identité D est par exemple une carte nationale d'identité, un passeport ou un permis de conduire.

De retour à la figure 2, le serveur de contrôle 4 vérifie dans une étape 102 une correspondance biométrique entre l'individu à enrôler U et l'individu de référence RU, à partir de l'image d'enrôlement I et de l'image de référence RI. Au cours de cette étape 102, le serveur de contrôle 4 met par exemple en œuvre une reconnaissance faciale dans ces deux images I et RI, et applique un traitement de comparaison biométrique de visages reconnus dans les deux images R et RI, ce traitement de comparaison étant connu l'homme du métier. Ce traitement de comparaison peut en particulier considérer que l'individu de référence et l'individu à enrôler correspondent si et seulement si une métrique représentative d'une distance entre les visages reconnus dans les images I et RI est inférieure à un seuil prédéfini.

Si le serveur de contrôle 4 considère que l'individu à enrôler U et l'individu de référence RU ne correspondent pas, le serveur de contrôle met fin à la phase d'enrôlement.

Si l'individu à enrôler U et l'individu de référence RU correspondent, le serveur de contrôle 4 passe à une étape d'analyse 104.

Dans l'étape d'analyse 104, le serveur de contrôle 4 analyse les informations A se trouvant sur le document d'identité tel que montré dans l'image de référence RI, de sorte à déterminer si l'individu de référence satisfait la condition d'accès prédéfinie ou non.

Dans notre mode de réalisation non-limitatif dans lequel la condition d'accès comprend une condition d'âge, l'étape d'analyse peut comprendre la détection d'une date de naissance indiquée sur le document d'identité montré dans l'image de référence, calculer l'âge actuel de l'individu de référence RU à partir de la date de naissance, et vérifier si l'âge actuel calculé est supérieur ou égal à un âge minimum requis pour accéder au site (par exemple 18 ans).

Si l'analyse des informations A révèle que l'individu de référence ne satisfait pas la condition prédéfinie (dans notre exemple : âge calculé < âge minimum requis), alors le serveur de contrôle met fin à la phase d'enrôlement.

Si l'analyse des informations A révèle que l'individu de référence satisfait la condition prédéfinie (dans notre exemple : âge calculé ≥ âge minimum requis), le serveur de contrôle applique dans une étape 106 la fonction de hachage F discutée précédemment à l'image d'enrôlement I de sorte à produire un condensat d'enrôlement H. On a donc : H = F(I). Le condensat est un nombre, dont la représentation en base 2 est un mot binaire.

Dans une étape 108, le serveur de contrôle 4 signe numériquement le condensat d'enrôlement H à l'aide de la clé privée SK, de sorte à produire un condensat d'enrôlement signé SH. SH est un autre nombre, dont la représentation en base 2 est un autre mot binaire.

Le condensat d'enrôlement signé comprend par exemple le condensat d'enrôlement H (donc non signé) et une signature numérique générée à l'étape 108. En particulier, le condensat d'enrôlement signé peut résulter d'une concaténation du condensat d'enrôlement H et de cette signature numérique générée à l'étape 108.

Le condensat d'enrôlement signé par le serveur 4 est représentatif du fait que le serveur de contrôle 4 admet que l'utilisateur U remplit la condition prédéfinie, et donc que cet utilisateur U pourra ultérieurement avoir le droit d'accéder au site internet 1.

Ensuite, le serveur de contrôle 4 met en œuvre des mesures (étapes 110) en vue d'une communication du condensat d'enrôlement signé SH à un émetteur des données d'enrôlement (cet émetteur étant le client 3 ou bien son utilisateur).

De préférence, ces mesures comprennent la génération d'un code-barres C représentant le condensat d'enrôlement signé SH. Le code-barres C peut être en une dimension ou bien en deux dimensions. S'il est en deux dimensions, le code-barres peut en particulier être un code dit « à réponse rapide » (plus souvent appelé « code QR »), comme illustré sur la figure 3, ou peut être un Flashcode ou encore un code-barres de type « 2D-Doc ».

Les mesures précitées peuvent en outre comprendre l'envoi du code-barres C au dispositif client 3 via l'interface de communication du serveur de contrôle 4. Dans ce mode de réalisation, le code barre est transmis sous forme de donnée numérique via un réseau de communication.

On va voir dans la suite que l'utilisateur U pourra ensuite soumettre le code-barre C comme preuve de son statut enrôlé (et donc implicitement comme preuve du fait qu'il remplit la condition prédéfinie pour accéder au site internet 1).

Jusqu'ici il a été supposé que le client 3 et le serveur de contrôle dialoguent au cours de la phase d'enrôlement à l'aide de leurs interfaces de communications respectives. Toutefois, dans un autre mode de réalisation, l'utilisateur du client 3 et le serveur de contrôle dialoguent par voie postale :
- L'utilisateur du client 3 envoie par pli postal des photocopies sur papier de l'image d'enrôlement et de l'image de référence, et ces photocopies sur papier peuvent ensuite être numérisées de sorte à permettre l'obtention par le serveur de contrôle 4 de l'image d'enrôlement et de l'image de référence.
- Le processeur du serveur de contrôle 4 peut commander une impression du code-barres C sur un support (par exemple un support en papier). Ce support peut ensuite être communiqué à l'utilisateur du dispositif client 3 sous pli postal, ce qui suppose que l'utilisateur a renseigné d'une façon ou d'une autre le serveur de contrôle 4 sur son adresse postale.

On a vu précédemment que certaines étapes de la phase d'enrôlement sont conditionnées à des tests : l'étape 104 d'analyse est mise en œuvre seulement s'il y a une correspondance entre l'individu à enrôler et l'individu de référence, et l'étape 106 d'application de la fonction de hachage est mise en œuvre seulement si l'analyse des informations A révèle que l'individu de référence satisfait la condition prédéfinie.

Ces deux tests peuvent toutefois être réalisés à des stades différents de la phase d'enrôlement, par exemple plus tardivement. Par exemple, l'étape 104 pourrait être mise en œuvre inconditionnellement, de même que l'étape 106. De manière générale, il est fait en sorte qu'au moins une étape parmi l'application de la fonction de hachage, la signature numérique et la mise en œuvre des mesures pour communiquer le condensat d'enrôlement signé est réalisé seulement si les conditions suivantes sont réunies :
- la vérification 102 révèle que l'individu à enrôler et l'individu de référence correspondent, et
- l'analyse 104 révèle que les informations satisfont la condition d'accès au site.

Le serveur d'accès 2 n'intervient pas dans la phase d'enrôlement.**b) Phase de contrôle**

On suppose que le serveur de contrôle 4 détecte qu'un utilisateur du client 3 demande un accès au site internet 1 émanant d'un dispositif client quelconque, que l'on supposera être le client 3 pour plus de simplicité. Cette situation est détectée d'abord par le serveur d'accès 2, qui envoie au serveur de contrôle 4 un message indiquant que le dispositif client 3 demande un accès.

La phase de contrôle est alors mise en œuvre.

La phase de contrôle vise à vérifier si un utilisateur a passé avec succès la phase d'enrôlement précitée. Ainsi, il est vérifié en creux si cet utilisateur satisfait la condition prédéfinie qui est requise pour accéder au site internet 1. On remarquera toutefois que la phase de contrôle n'utilise pas de document d'identité.

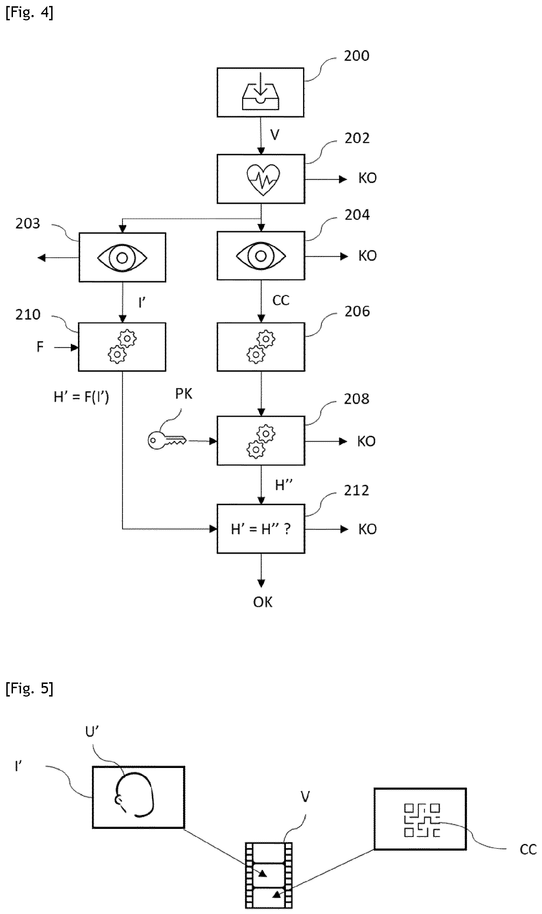

En référence à la figure 4, la phase de contrôle comprend les étapes suivantes.

Dans une étape préliminaire, le serveur d'accès 2 redirige le client 3 vers une page hébergée par le serveur de contrôle 4. A compter de ce moment, un dialogue direct est instauré entre le serveur de contrôle 4 et le client 3, de préférence sans passer par le serveur d'accès 2. De la sorte, des données peuvent être envoyées par le client 3 au serveur de contrôle 4, sans que ces données ne transitent par le serveur d'accès 2 au site.

Le serveur de contrôle 4 invite l'utilisateur du client 3, via un ou plusieurs messages appropriés, à allumer la caméra du client 3 et se présenter devant la caméra.

Dans une étape 200, le serveur de contrôle 4 reçoit une vidéo d'épreuve V acquise par la caméra du client 3, puis transmise au serveur de contrôle 4 via l'interface de communication du client 3.

Dans une étape 202, le serveur de contrôle 4 applique un test de vivacité (« liveness ») à la vidéo d'épreuve V, afin de vérifier la présence d'un individu vivant dans la vidéo d'épreuve V. Un tel test de vivacité est connu de l'homme du métier. Ce test de vivacité permet notamment d'éviter des fraudes consistant à tromper le serveur de contrôle 4 en présentant une photo d'autrui à la caméra au lien d'un vrai visage. Le test de vivacité sait faire la différence entre un individu vivant et un individu représenté sur un support lui-même placé dans le champ de vision de la caméra (par exemple une photographie au format papier, ou affiché sur un smartphone).

Si le test de vivacité échoue (pas d'individu vivant détecté dans la vidéo), alors le serveur de contrôle 4 génère un résultat « KO » indiquant que l'émetteur des données d'épreuve n'a pas le droit d'accéder au site.

Si le test de vivacité réussit (un individu vivant est détecté dans la vidéo), la phase de contrôle se poursuit.

Le serveur de contrôle 4 invite l'utilisateur du client 3, via un ou plusieurs messages appropriés, à fournir au serveur de contrôle 4 le condensat d'enrôlement signé qui lui a été remis à l'issue de la phase d'enrôlement (le cas échéant sous forme de code-barres), ainsi que l'image d'enrôlement qu'il avait soumis lors de cette phase d'enrôlement.

De préférence, le serveur de contrôle 4 invite l'utilisateur du client 3 à présenter devant la caméra du client 3 la photographie qui montrait l'individu U à enrôler, cette photographie étant elle-même montrée dans l'image d'enrôlement.

En supposant que l'utilisateur du client 3 a répondu aux instructions du serveur de contrôle 4, le serveur de contrôle 4 obtient dans une étape 203 une image d'épreuve I' montrant un utilisateur U' à contrôler (voir figure 5), par exemple en l'extrayant de la vidéo V. De manière générale, l'utilisateur U' est censé correspondre biométriquement à l'utilisateur U montré dans l'image d'enrôlement lors de la phase d'enrôlement. Plus précisément, l'image I' est censé montrer la photographie présentée lors de la phase d'enrôlement, tout comme l'image d'enrôlement. Ainsi, dans un cas normal, l'image I' est censé sensiblement correspondre à l'image d'enrôlement.

Si lors de l'étape 203 le serveur de contrôle échoue à obtenir l'image d'épreuve I', par exemple dans un délai prédéfini, alors le serveur de contrôle 4 génère le résultat « KO ».

L'étape 203 peut en outre comprendre ou être suivie d'une vérification de correspondance entre l'individu vivant identifié à l'étape 202 et l'individu à contrôler montré dans l'image d'épreuve I'. Si les deux individus ne correspondent pas, alors le serveur de contrôle 4 génère le résultat « KO ».

Toujours en supposant que l'utilisateur du client 3 a répondu aux instructions du serveur de contrôle 4, le serveur de contrôle obtient dans une étape 204 une image montrant un code-barres d'épreuve CC, par exemple en l'extrayant de la vidéo V. Le code-barres d'épreuve est censé être le code-barres C représentant le condensat d'enrôlement signé pour l'utilisateur du client 3 lors de la phase d'enrôlement.

Si lors de l'étape 204 le serveur de contrôle échoue à obtenir le code-barres d'épreuve CC, par exemple dans un délai prédéfini, alors le serveur de contrôle 4 génère le résultat « KO ».

Dans une étape 206, le serveur de contrôle récupère le mot binaire représenté par le code-barres CC en faisant l'hypothèse que ce mot binaire est un condensat d'épreuve signé, noté SH'.

A ce stade de la phase de contrôle, le serveur de contrôle a obtenu des données d'épreuve comprenant :
- l'image d'épreuve I' montrant l'individu U' à contrôler, et
- un condensat d'épreuve signé SH' (en tout cas, un mot binaire que le serveur de contrôle interprète comme un tel condensat).

Dans une étape 208, le serveur de contrôle 4 vérifie la signature du condensat d'épreuve signé, en s'aidant de la clé publique PK formant une paire de clés asymétriques avec la clé privée SK. Au cours de cette étape 208, il est déterminé si cette signature a été produite par la clé privée ou non. Ainsi, il est indirectement déterminé si le condensat d'épreuve signé SH' est un condensat d'enrôlement généré par le serveur de contrôle lors d'une mise en œuvre de la phase d'enrôlement.

Si la du condensat d'épreuve signé n'a pas été produite par la clé privée, le serveur de contrôle 4 génère le résultat KO indiquant que l'émetteur des données d'épreuve n'a pas le droit d'accéder au site.

Par ailleurs, dans une étape 210, le serveur de contrôle 4 applique la fonction de hachage F à l'image d'épreuve I' (la même fonction de hachage que celle utilisée lors de la phase d'enrôlement), de sorte à produire un autre condensat d'épreuve H'. On a donc : H' = F(I').

L'étape 210 peut être réalisée avant, après ou pendant l'une quelconque des étapes 203, 204, 206, 208.

Dans une étape 212, le serveur de contrôle 4 vérifie une correspondance entre le condensat d'épreuve signé SH (qui a été le cas échéant déduit du code-barres d'épreuve CC) et l'autre condensat d'épreuve H' (qui a été déduit de l'image d'épreuve I' montrant l'utilisateur à contrôler).

Il est à comprendre ici que la correspondance réalisée lors de l'étape 212 ne prend pas en considération la signature du condensat d'épreuve signé SH. Notons H" la version non-signée du condensat d'épreuve signée SH. Le condensat d'épreuve H" peut constituer une portion de SH (la signature constituant une autre portion de SH).

Au cours de l'étape 212, il est calculé une métrique représentative d'une distance entre les deux condensats d'épreuve H' et H", et cette métrique est comparée à à un seuil. Il y a correspondance entre les deux condensats d'épreuve H' et H" si est seulement si la métrique représentative de la distance est inférieure au seuil prédéfini.

Le fait d'avoir utilisé une fonction F de hachage perceptuel au cours de la phase d'enrôlement puis au cours de l'étape 210 est avantageux, car permet une certaine tolérance dans la vérification de correspondance effectuée à l'étape 212. Il sera ainsi possible de conclure à une correspondance entre les condensats d'épreuve H' et H" lorsque les images I et I' sont similaires mais pas forcément strictement identiques aux pixels près. Il est ainsi permis à l'utilisateur du client 3 de ne pas soumettre exactement la même image I = I' lors des phases d'enrôlement et de contrôle, ce qui est plus pratique pour lui. Une telle correspondance peut en particulier être constatée lorsque les images I et I' montrent une même photographie mais positionnée différemment ou éclairée différemment.

Si les condensats d'épreuve H' et H" ne correspondent pas, le serveur de contrôle 4 génère le résultat KO indiquant que l'émetteur des données d'épreuve n'a pas le droit d'accéder au site.

Si les condensats d'épreuve H' et H" correspondent, le serveur de contrôle 4 génère un résultat OK indiquant qu'un émetteur des données d'épreuve a le droit d'accéder au site.

En définitive, le résultat OK n'est obtenu que si les conditions suivantes sont réunies :
- la vérification de signature (réalisée à l'étape 208) révèle que le condensat d'épreuve signé a été signé avec la clé privée,
- la vérification de correspondance révèle que les condensants d'épreuve H' et H" correspondent,
- optionnellement, il est constaté que l'individu vivant détecté dans la vidéo d'épreuve V correspond à l'individu montré dans l'image d'épreuve I'.

Le résultat du contrôle généré (OK ou KO, selon le cas) est ensuite envoyé par le serveur de contrôle 4 au serveur d'accès 2, via l'interface de communication du serveur de contrôle 4.

Lorsque le résultat de contrôle est OK, alors le serveur d'accès 2 accepte la demande d'accès au site internet 1 émanant du client 3. Le client 3 accède donc au site 1.

Lorsque le résultat de contrôle est KO, alors le serveur d'accès 2 refuse la demande d'accès au site internet 1 émanant du client 3. Le serveur d'accès 2 empêche ainsi le client 3 d'accéder au site 1.

La phase de contrôle est déclenchée à chaque nouvelle demande d'accès au site internet 1.

Dans ce mode de réalisation, on remarquera que le document d'identité (fournissant les informations A permettant de déduire si l'individu auquel se rapporte ce document remplie la condition d'accès au site internet 2) n'est utilisé qu'une seule fois, à l'enrôlement, mais n'est pas utilisé lors de la phase de contrôle ultérieure.

Par ailleurs, les données remises à l'utilisateur à l'issue de la phase d'enrôlement ne permettent pas de remonter aux données d'enrôlement fournies pendant la phase d'enrôlement, notamment à l'image d'enrôlement I, à l'image de référence RI, et aux informations présente sur le document d'identité fourni pendant la phase d'enrôlement.

### c) Variante de la phase de contrôle avec défi-réponse

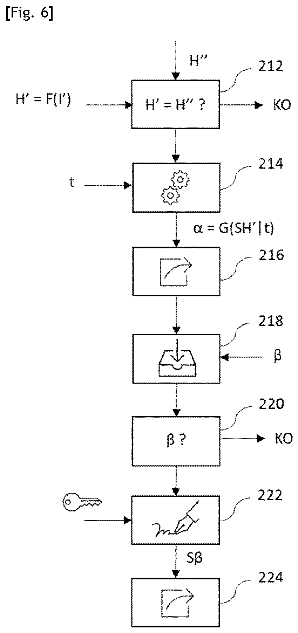

On a représenté sur la figure 6 une variante de la phase de contrôle comprenant des étapes supplémentaires mises en œuvre à la suite de l'étape 212 de vérification de correspondance entre les condensats H' et H", lorsque le serveur de contrôle conclut que ces condensats H' et H" correspondent. Comme on le verra dans la suite cette variante a l'avantage de permettre une auditabilité des opérations réalisées.

Dans une étape 214, le serveur de contrôle hache une donnée dépendant du condensat d'épreuve signé SH' et d'une valeur t de variable. Le résultat de ce hachage est un autre condensat α, que l'on appelle plutôt empreinte α dans la suite pour distinguer cette donnée des condensants discutés précédemment résultant de l'application de la fonction F à une image. A cet égard, on notera que la fonction de hachage G utilisée dans l'étape 214 n'est pas forcément la fonction F.

La donnée faisant l'objet du hachage de l'étape 214 peut être une donnée résultant d'une concaténation entre le condensat d'épreuve signé SH' et la valeur de variable. On a alors α = G(SH' |t).

La prise en compte de la valeur de variable lors de l'étape 214 permet de diversifier la valeur de l'empreinte α, ce qui permet de mieux protéger le serveur de contrôle 4 contre des attaques par rejeu.

La variable est par exemple une variable temporelle. La valeur t de la variable peut alors être ou dépendre d'une date courante, ou d'une information extraite de la date courante (par exemple t est l'heure courante, la minute courante, la seconde courante, etc.).

Dans une étape 216, le serveur de contrôle 4 envoie l'empreinte α au serveur d'accès 2.

Le serveur d'accès 2 génère une donnée de défi β à partir de l'empreinte α et retourne la donnée de défi au serveur de contrôle 4.

De préférence, la donnée de défi β résulte de l'application à l'empreinte α d'une fonction aléatoire vérifiable (en anglais : Verifiable Random Function, abrégé en VRF). Un exemple de VRF utilisable est celle décrite dans le document « Making NSEC5 Practical for DNSSEC », par Dimitrios Papadopoulos et al., qui est notamment accessible via le lien https://eprint.iacr.org/2017/099.pdf.

Dans une étape 218, le serveur de contrôle reçoit la donnée de défi β envoyée par le serveur d'accès.

Dans une étape 220, le serveur de contrôle vérifie si la donnée de défi β satisfait une condition de validité prédéfinie ou non.

Si la donnée de défi satisfait la condition de validité β, le serveur de contrôle met en œuvre une étape 222 de signature numérique de la donnée de défi à l'aide d'une deuxième clé privée, de sorte à produire une donnée de défi signée SB. La deuxième clé privée peut être différente de la clé privée SK utilisée au cours de la phase d'enrôlement.

Dans une étape 224, le serveur de contrôle envoie la donnée de défi signée SB au serveur d'accès 2, et ce à condition que le résultat de contrôle généré à l'étape 212 soit OK.

Pour que l'étape d'envoi 224 soit mise en œuvre, les conditions suivantes doivent être réunies :
- le résultat de contrôle généré à l'étape 212 est OK,
- la vérification de l'attribut d'épreuve révèle que l'attribut d'épreuve contient des informations qui satisfont la condition d'accès au site,
- la vérification de signature (réalisée à l'étape 208) révèle que le condensat d'épreuve signé a été signé avec la clé privée.

Ensuite, le serveur d'accès 2 vérifie la validité de la donnée de défi signée SB à l'aide d'une deuxième clé publique, la deuxième clé privée et la deuxième clé publique formant une deuxième paire de clés asymétriques. Si la donnée de défi signée SB se révèle être valide, le serveur d'accès 2 accepte la demande d'accès au site émanant de l'émetteur des données d'épreuve (le client 3). Si la donnée de défi signé se révèle ne pas être valide, le serveur d'accès refuse la demande d'accès au site émanant du client 3.

Dans cette variante de réalisation, le procédé aboutit à un résultat positif prenant la forme d'une donnée SB plus complexe qu'un simple « OK ». Les étapes supplémentaires de cette variante ont l'avantage de rendre le procédé auditable. En effet, il est possible de vérifier a posteriori si une donnée qui se présente comme une donnée SB résulte véritablement des calculs décrits. A l'inverse, la variante représentée en figure 3 n'est pas auditable, car il n'est pas possible de déduire le simple résultat « OK » que toutes les étapes en amont, concourant à la sécurisation du site, ont bel et bien été mises en œuvre.

Sur la figure 6, les étapes 214 et suivantes sont présentées comme étant toutes mises en œuvre après l'étape 212. Toutefois, ceci n'est pas obligatoire, car toutes les étapes qui précèdent l'étape 224 peuvent être réalisée à réception du condensat d'épreuve signé SH', sans forcément attendre d'avoir la confirmation que H' et H" correspondent.

### 3) Procédé de contrôle d'accès (deuxième mode de réalisation)

On va maintenant décrire un procédé mis en œuvre par le serveur de contrôle 4 selon un deuxième mode de réalisation. Dans ce deuxième mode de réalisation, la condition d'accès prédéfinie pour accéder au site 1 n'est pas examinée lors de la phase d'enrôlement, mais lors de la phase de contrôle.

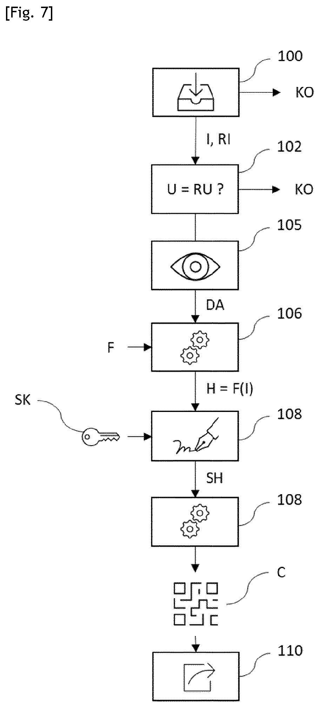

Dans la phase d'enrôlement (voir figure 7), l'étape 104 est remplacée par une étape 105 de génération, par le processeur du serveur de contrôle 4, d'un attribut d'enrôlement DA contenant les informations A. Au cours de l'étape 105, le serveur de contrôle 4 extrait les informations A se trouvant sur le document d'identité tel que montré dans l'image de référence RI et les répercute dans l'attribut DA, mais ne cherche pas spécialement à déterminer si l'individu de référence satisfait une condition d'accès prédéfinie sur la base des informations A.

L'étape 105 est mise en œuvre de manière inconditionnelle, indépendamment du fait que ces informations A satisfassent ou non la condition d'accès. Puisque l'attribut DA contient les informations A, cet attribut peut justement être utilisé plus tard pour déterminer si la condition d'accès est remplie ou non par l'utilisateur enrôlé.

Par exemple, lorsque la condition d'accès est une condition d'âge, l'attribut DA peut contenir une chaîne de caractère du type « birthdate=A » (A étant ici la date de naissance trouvée sur le document d'identité D lors de l'étape 105).

De manière générale, l'attribut d'enrôlement fait l'objet d'un marquage à l'aide d'une clé de marquage. Ce marquage produit ainsi un attribut d'enrôlement marqué.

Le marquage peut être une signature numérique. Dans ce cas, l'attribut d'enrôlement marqué est un attribut d'enrôlement signé, au même titre que le condensat d'enrôlement signé. Il est à noter que ces deux éléments signés peuvent être signés avec la clé privée SK discutée précédemment (autrement dit, la clé de marquage est la clé privé SK), soit dans deux étapes séparées, soit dans une seule et même opération de signature. Alternativement, ces deux éléments sont signés à l'aide de deux clés différentes.

En variante, le marquage peut être un chiffrement. Dans ce cas, l'attribut d'enrôlement marqué est un attribut d'enrôlement chiffré.

L'attribut d'enrôlement peut constituer une donnée indépendante du condensat d'enrôlement signé SH, ou bien être compris dans le condensat d'enrôlement signé SH. En particulier, le condensat d'enrôlement signé peut résulter d'une concaténation du condensat d'enrôlement H, de l'attribut DA et de la signature numérique générée à l'étape 108.

L'attribut d'enrôlement marqué est remis à l'utilisateur 3, par exemple selon les mêmes modalités que pour le condensat d'enrôlement signé SH.

Comme dans le premier mode de réalisation, certains tests conditionnent la mise en œuvre de certaines étapes de la phase d'enrôlement de ce deuxième mode de réalisation, mais le moment où ces tests sont mis en œuvre importe peu. De manière générale, il est fait en sorte qu'au moins une étape parmi la génération de l'attribut d'enrôlement, l'application de la fonction de hachage, la signature numérique, le marquage et la mise en œuvre des mesures est réalisée seulement si l'individu à enrôler et l'individu de référence correspondent.

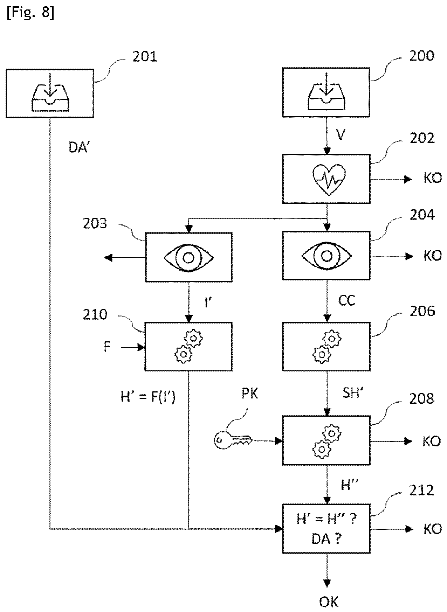

Dans la phase de contrôle (voir figure 8), le serveur de contrôle 4 demande à l'utilisateur de lui fournisse l'attribut d'enrôlement marqué remis lors de la phase d'enrôlement. Ainsi, dans une étape 201, le serveur de contrôle 4 reçoit un attribut d'épreuve marqué DA' censé correspondre à l'attribut d'enrôlement.

Le serveur de contrôle 4 applique par ailleurs à l'attribut d'épreuve marqué DA' un traitement complémentaire au marquage réalisé au cours de la phase d'enrôlement. Ce traitement complémentaire permet de déduire si l'attribut d'épreuve marqué a été marqué à l'aide de la clé de marquage ou non. Le traitement complémentaire utilise une clé qui forme avec la clé de marquage une paire de clés asymétriques. Par exemple, lorsque la clé de marquage est la clé privée SK, la clé utilisée par le traitement complémentaire est la clé publique PK.

Lorsque le marquage est une signature numérique, le traitement complémentaire est une vérification de signature.

Lorsque le marquage est un chiffrement, le traitement complémentaire est un déchiffrement. Dans ce deuxième cas, on peut déduire que la clé de marquage n'a pas été utilisée pour marquer l'attribut d'épreuve lorsque le résultat de ce déchiffrement est illisible, c'est-à-dire qu'il n'a pas un format attendu.

Le traitement complémentaire au marquage peut faire partie de l'étape 208 de vérification de signature, ou bien être réalisée avant ou après.

Au cours de l'étape 212, le serveur de contrôle 4 ne fait pas que vérifier la correspondance entre les condensats d'épreuve H' et H''. Au cours de l'étape 212, le serveur de contrôle 4 vérifie par ailleurs, sur la base de l'attribut d'épreuve DA', si les informations que cet attribut DA' contient vérifient la condition d'accès au site 1 (après leur déchiffrement, le cas échéant).

Le résultat OK n'est obtenu dans ce mode de réalisation que si les conditions suivantes sont réunies :
- le traitement complémentaire révèle que l'attribut d'épreuve marqué a été marqué à l'aide de la clé de marquage,
- la vérification de l'attribut d'épreuve marqué révèle que l'attribut d'épreuve marqué contient des informations qui satisfont la condition d'accès au site,
- la vérification de signature (réalisée à l'étape 208) révèle que le condensat d'épreuve signé a été signé avec la clé privée,
- la vérification de correspondance révèle que les condensants d'épreuve H' et H" correspondent,
- optionnellement, il est constaté que l'individu vivant détecté dans la vidéo d'épreuve V correspond à l'individu montré dans l'image d'épreuve I'.

Bien entendu, la phase de contrôle du procédé selon le deuxième mode de réalisation peut comprendre les étapes optionnelles de défi-réponse discutées plus haut en relation avec la figure 6. Les données remises à l'utilisateur à l'issue de la phase d'enrôlement ne permettent pas de remonter aux données d'enrôlement autre que l'information A, fournies pendant la phase d'enrôlement, notamment à l'image d'enrôlement I, à l'image de référence RI, et à d'autres informations présentes sur le document d'identité fourni pendant la phase d'enrôlement.

### 4) Autres modes de réalisation

Bien que l'usage des code-barres C, CC est particulièrement avantageux pour son côté pratique pour l'utilisateur, cet usage n'est pas obligatoire. L'utilisateur à enrôler peut se voir remettre le condensat d'enrôlement signé SH, et/ou l'attribut d'enrôlement, directement sous forme de fichier numérique lors de la phase d'enrôlement, sans forcément passer par une représentation graphique.

Dans les modes de réalisation illustrés sur les figures, le serveur de contrôle 4 reçoit une vidéo et les données d'épreuve sont extraites de cette vidéo. Ceci n'est pas obligatoire. Le serveur de contrôle 4 peut alternativement inviter un utilisateur du client 3 à téléverser les données d'épreuve en passant par un menu approprié.

Jusqu'ici, il a été fait l'hypothèse que la phase d'enrôlement et la phase de contrôle sont mises en œuvre par un même serveur (le serveur de contrôle 4). En variante, il peut être envisagé de confier la phase d'enrôlement à un serveur d'enrôlement distinct du serveur de contrôle, et le serveur de contrôle ne met en œuvre que la phase de contrôle.

Il a également été décrit des modes de réalisation dans lequel l'entité qui vérifie la condition d'accès au site 1 (le serveur de contrôle 4) est distinct de l'entité qui prend la décision d'autoriser ou de refuser l'accès au site 1 (le serveur d'accès 2). Ces modes de réalisation sont avantageux, car ils permettent de faire en sorte que les administrateurs du site 1 n'aient pas accès au contenu du document d'identité D. Toutefois, dans d'autres modes de réalisation, le serveur de contrôle 4 et le serveur d'accès 2 sont un seul et même serveur.

Jusqu'à présent, il a été supposé que le site 1 est un site internet. Le procédé proposé cherche alors à contrôler l'accès à des données. Or, les modes de réalisation qui précèdent sont également applicables à un site physique, autrement dit une zone sécurisée. Dans cette application alternative, le procédé vise à contrôle un accès physique à la zone sécurisé par un individu possesseur du client 3 ; la fonction assurée par le serveur d'accès 2 est alors de décider si un individu a le droit d'accéder physiquement à cette zone sécurisée ou non.

## Revendications

1. Procédé de contrôle d'accès à un site, le procédé étant mis en œuvre par ordinateur et comprenant :
• une phase d'enrôlement comprenant des étapes de :
• obtention (100) de données d'enrôlement comprenant :
• une image d'enrôlement (I) montrant un individu à enrôler,
• une image de référence (RI) montrant:
• une photographie se trouvant sur un document d'identité, la photographie montrant un individu de référence,
• des informations se trouvant sur le document d'identité et se rapportant à l'individu de référence,
• vérification (102) d'une correspondance entre l'individu à enrôler et l'individu de référence à partir de l'image d'enrôlement (I) et de l'image de référence (RI),
• analyse (104) des informations montrées dans l'image de référence (RI), de sorte à déterminer si les informations satisfont ou non une condition d'accès au site,
• application (106) d'une fonction de hachage (F) à l'image d'enrôlement (I) de sorte à produire un condensat d'enrôlement (H),
• signature numérique du condensat d'enrôlement (H) à l'aide d'une clé privée (SK), de sorte à produire un condensat d'enrôlement signé (SH),
• mise en œuvre de mesures en vue d'une communication du condensat d'enrôlement signé (SH) à un émetteur des données d'enrôlement,
• dans lequel au moins une étape parmi l'application de la fonction de hachage, la signature numérique et la mise en œuvre des mesures est réalisée seulement si les conditions suivantes sont réunies :
• la vérification révèle que l'individu à enrôler et l'individu de référence correspondent, et
• l'analyse révèle que les informations satisfont la condition d'accès au site,
• une phase de contrôle comprenant des étapes de :
• obtention de données d'épreuve comprenant :
• une image d'épreuve (I') montrant un individu à contrôler, et
• un condensat d'épreuve signé (SH'),
• à l'aide d'une clé publique (PK) formant une paire de clés asymétriques avec la clé privée, vérification de signature du condensat d'épreuve signé (SH'),
• application (210) de la fonction de hachage (F) à l'image d'épreuve (I') de sorte à produire un autre condensat d'épreuve (H'),
• vérification (212) d'une correspondance entre le condensat d'épreuve signé et l'autre condensat d'épreuve,
• génération d'un résultat de contrôle indiquant que :
• un émetteur des données d'épreuve a le droit d'accéder au site, seulement si les conditions suivantes sont réunies :
• la vérification de signature révèle que le condensat d'épreuve signé a été signé avec la clé privée,
• la vérification de correspondance révèle que le condensat d'épreuve signé et l'autre condensat d'épreuve correspondent,
• l'émetteur des données d'épreuve n'a pas le droit d'accéder au site sinon.

2. Procédé de contrôle d'accès à un site, le procédé étant mis en œuvre par ordinateur et comprenant :
• une phase d'enrôlement comprenant des étapes de :
• obtention (100) de données d'enrôlement comprenant :
• une image d'enrôlement (I) montrant un individu à enrôler,
• une image de référence (RI) montrant:
• une photographie se trouvant sur un document d'identité, la photographie montrant un individu de référence,
• des informations se trouvant sur le document d'identité et se rapportant à l'individu de référence,
• vérification (102) d'une correspondance entre l'individu à enrôler et l'individu de référence à partir de l'image d'enrôlement (I) et de l'image de référence (RI),
• génération (105) d'un attribut d'enrôlement qui contient les informations montrées dans l'image de référence (RI),
• application (106) d'une fonction de hachage (F) à l'image d'enrôlement (I) de sorte à produire un condensat d'enrôlement (H),
• signature numérique du condensat d'enrôlement (H) à l'aide d'une clé privée (SK), de sorte à produire un condensat d'enrôlement signé (SH),
• marquage de l'attribut d'enrôlement à l'aide d'une clé de marquage, de sorte à produire un attribut d'enrôlement marqué,
• mise en œuvre de mesures en vue d'une communication du condensat d'enrôlement signé (SH) et de l'attribut d'enrôlement marqué à un émetteur des données d'enrôlement,
• dans lequel au moins une étape parmi la génération de l'attribut d'enrôlement, l'application de la fonction de hachage, la signature numérique, le marquage et la mise en œuvre des mesures est réalisée seulement si l'individu à enrôler et l'individu de référence correspondent,
• une phase de contrôle comprenant des étapes de :
• obtention de données d'épreuve comprenant :
• une image d'épreuve (I') montrant un individu à contrôler, et
• un condensat d'épreuve signé (SH'),
• un attribut d'épreuve marqué,
• à l'aide d'une clé publique (PK) formant une paire de clés asymétriques avec la clé privée, vérification de signature du condensat d'épreuve signé (SH'),
• application à l'attribut d'épreuve marqué d'un traitement complémentaire au marquage permettant de déduire si l'attribut d'épreuve marqué a été marqué à l'aide de la clé de marquage ou non,
• application (210) de la fonction de hachage (F) à l'image d'épreuve (I') de sorte à produire un autre condensat d'épreuve (H2),
• vérification (212) d'une correspondance entre le condensat d'épreuve signé et l'autre condensat d'épreuve,
• vérification de l'attribut d'épreuve marqué, de sorte à déterminer si l'attribut d'épreuve marqué contient des informations qui satisfont ou non une condition d'accès au site,
• génération d'un résultat de contrôle indiquant que :
• un émetteur des données d'épreuve a le droit d'accéder au site, seulement si les conditions suivantes sont réunies :
• la vérification de signature révèle que le condensat d'épreuve signé a été signé avec la clé privée,
• le traitement complémentaire révèle que l'attribut d'épreuve marqué a été marqué à l'aide de la clé de marquage,
• la vérification de l'attribut d'épreuve marqué révèle que l'attribut d'épreuve marqué contient des informations qui satisfont la condition d'accès au site, et
• la vérification de correspondance révèle que le condensat d'épreuve signé et l'autre condensat d'épreuve correspondent,
• l'émetteur des données d'épreuve n'a pas le droit d'accéder au site sinon.

3. Procédé selon la revendication précédente, dans lequel :
• Le marquage est un chiffrement, et le traitement complémentaire est un déchiffrement, ou
• Le marquage est une signature numérique, et le traitement complémentaire est une vérification de signature numérique.

4. Procédé selon l'une quelconque des revendications précédentes, dans lequel le hachage est un hachage perceptuel.

5. Procédé selon l'une quelconque des revendications précédentes, dans lequel les mesures comprennent la génération (108) d'un code-barres d'enrôlement (C) représentant le condensat d'enrôlement signé (SH).

6. Procédé selon l'une quelconque des revendications précédentes, dans lequel
• Les données d'épreuve comprennent une vidéo d'épreuve (V),
• La phase de contrôle comprend les étapes suivantes :
• vérification de présence d'un individu vivant dans la vidéo d'épreuve (V),
• si un individu vivant est présent dans la vidéo d'épreuve (V), obtention de l'image d'épreuve à partir de la vidéo d'épreuve (V).

7. Procédé selon la revendication précédente, comprenant une étape de :
• vérification d'une correspondance entre l'individu vivant et l'individu à contrôler à partir de l'image d'épreuve, dans lequel le résultat de contrôle généré indique que l'émetteur des données d'épreuve n'a pas le droit d'accéder au site si l'individu vivant et l'individu à contrôler ne correspondent pas.

8. Procédé selon l'une quelconque des revendications 6 et 7 dans leur dépendance à la revendication 5, dans lequel la phase de contrôle comprend en outre une étape de :
• détection (204) dans la vidéo d'épreuve (V) d'un code-barres d'épreuve (CC) représentant le condensat d'épreuve signé.

9. Procédé selon l'une quelconque des revendications précédentes, dans lequel :
• La phase de contrôle est mise en œuvre par un serveur de contrôle,
• Si le résultat de contrôle indique que l'émetteur des données d'épreuve a le droit d'accéder au site, le résultat de contrôle est transmis à un serveur d'accès au site distinct du serveur de contrôle, de sorte que le serveur d'accès au site accepte une demande d'accès au site émanant de l'émetteur des données d'épreuve.

10. Procédé selon la revendication précédente, dans lequel les données d'épreuve sont obtenues par le serveur de contrôle sans passer par le serveur d'accès.

11. Procédé selon l'une quelconque des revendications 9 et 10, dans lequel la phase de contrôle comprend les étapes suivantes :
• hachage (214) d'une donnée dépendant du condensat d'épreuve signé et d'une valeur d'une variable, de sorte à produire une empreinte (α),
• envoi (216) de l'empreinte (α) au serveur d'accès au site ;
• réception d'une donnée de défi (B) générée par le serveur d'accès au site à partir de l'empreinte (α),
• détermination du fait que la donnée de défi (B) satisfait une condition de validité ou non,
• si la donnée de défi (B) satisfait la condition de validité, signature numérique de la donnée de défi à l'aide d'une deuxième clé privée, de sorte à produire une donnée de défi signée (SB),
• Si le résultat de contrôle indique que l'émetteur des données d'épreuve a le droit d'accéder au site, envoi de la donnée de défi signée (SB) au serveur d'accès, le serveur d'accès étant configuré pour :
• vérifier la validité de la donnée de défi signée (SB) à l'aide d'une deuxième clé publique, la deuxième clé privée et la deuxième clé publique formant une deuxième paire de clés asymétriques,
• si la donnée de défi signée (SB) se révèle être valide, acceptation d'une demande d'accès au site émanant de l'émetteur des données d'épreuve.

12. Procédé selon la revendication précédente, dans lequel la variable est une variable temporelle.

13. Procédé selon l'une quelconque des revendications 11 et 12, dans lequel le serveur d'accès est configuré pour générer la donnée de défi (B) par application d'une fonction aléatoire vérifiable à l'empreinte (α).

14. Procédé selon l'une quelconque des revendications précédentes, dans lequel la condition d'accès au site comprend une condition d'âge, par exemple une condition de majorité.

15. Produit programme d'ordinateur comprenant des instructions de code de programme pour l'exécution des étapes du procédé selon l'une des revendications précédentes, lorsque ce programme est exécuté par au moins un processeur.

## Patentansprüche

1. Verfahren zur Zugangskontrolle zu einem Standort, wobei das Verfahren computergestützt durchgeführt wird und umfasst:
• eine Registrierungsphase, die folgende Schritte umfasst:
• Erfassen (100) von Registrierungsdaten, die Folgendes umfassen:
• ein Registrierungsbild (I), das eine zu registrierende Person zeigt,
• ein Referenzbild (RI), das Folgendes zeigt:
• ein Foto auf einem Ausweisdokument, wobei das Foto eine Referenzperson zeigt,
• Informationen, die sich auf dem Ausweisdokument befinden und sich auf die Referenzperson beziehen,
• Überprüfung (102) einer Übereinstimmung zwischen der zu registrierenden Person und der Referenzperson anhand des Registrierungsbildes (I) und des Referenzbildes (RI),
• Analyse (104) der im Referenzbild (RI) dargestellten Informationen, um festzustellen, ob die Informationen eine Zugangsbedingung für den Standort erfüllen oder nicht,
• Anwendung (106) einer Hash-Funktion (F) auf das Registrierungsbild (I), um einen Registrierungshash (H) zu erzeugen,
• digitale Signierung des Registrierungs-Hashwerts (H) mit Hilfe eines privaten Schlüssels (SK), um einen signierten Registrierungs-Hashwert (SH) zu erzeugen,
• Durchführung von Maßnahmen zur Übermittlung des signierten Registrierungs-Hashwerts (SH) an einen Absender der Registrierungsdaten,
• wobei mindestens einer der folgenden Schritte - die Anwendung der Hash-Funktion, die digitale Signatur und die Durchführung der Maßnahmen - nur dann ausgeführt wird, wenn die folgenden Bedingungen erfüllt sind:
• die Überprüfung ergibt, dass die zu registrierende Person und die Referenzperson übereinstimmen, und
• die Analyse ergibt, dass die Informationen die Zugangsvoraussetzung für die Website erfüllen,
• eine Kontrollphase, die folgende Schritte umfasst:
• Erfassung von Testdaten, bestehend aus:
• ein Testbild (I'), das eine zu kontrollierende Person zeigt, und
• ein signiertes Test-Digest (SH'),
• Überprüfung der Signatur des signierten Test-Hashwerts (SH') mithilfe eines öffentlichen Schlüssels (PK), der zusammen mit dem privaten Schlüssel ein asymmetrisches Schlüsselpaar bildet,
• Anwendung (210) der Hash-Funktion (F) auf das Testbild (I'), um ein weiteres Test-Hash (H') zu erzeugen,
• Überprüfung (212) einer Übereinstimmung zwischen dem signierten Prüf-Hash und dem anderen Prüf-Hash,
• Erzeugung eines Prüfergebnisses, das angibt, dass:
• ein Absender der Testdaten nur dann das Recht hat, auf die Website zuzugreifen, wenn die folgenden Bedingungen erfüllt sind:
• die Signaturprüfung ergibt, dass das signierte Test-Digest mit dem privaten Schlüssel signiert wurde,
• die Übereinstimmungsprüfung ergibt, dass das signierte Test-Hash und das andere Test-Hash übereinstimmen,
• andernfalls hat der Absender der Testdaten kein Recht auf Zugang zum Standort.

2. Verfahren zur Zugangskontrolle zu einem Standort, wobei das Verfahren computergestützt durchgeführt wird und Folgendes umfasst:
• eine Registrierungsphase, die folgende Schritte umfasst:
• das Erfassen (100) von Registrierungsdaten, die Folgendes umfassen:
• ein Registrierungsbild (I), das eine zu registrierende Person zeigt,
• ein Referenzbild (RI), das Folgendes zeigt:
• ein Foto auf einem Ausweisdokument, wobei das Foto eine Referenzperson zeigt,
• Informationen, die sich auf dem Ausweisdokument befinden und sich auf die Referenzperson beziehen,
• Überprüfung (102) einer Übereinstimmung zwischen der zu registrierenden Person und der Referenzperson anhand des Registrierungsbildes (I) und des Referenzbildes (RI),
• Erzeugung (105) eines Erfassungsattributs, das die im Referenzbild (RI) dargestellten Informationen enthält,
• Anwendung (106) einer Hash-Funktion (F) auf das Registrierungsbild (I), um einen Registrierungshash (H) zu erzeugen,
• digitale Signierung des Registrierungs-Hashwerts (H) mit einem privaten Schlüssel (SK), um einen signierten Registrierungs-Hashwert (SH) zu erzeugen,
• Markieren des Registrierungsattributs mit Hilfe eines Markierungsschlüssels, um ein markiertes Registrierungsattribut zu erzeugen,
• Durchführung von Maßnahmen zur Übermittlung des signierten Registrierungs-Hashwerts (SH) und des markierten Registrierungsattributs an einen Absender der Registrierungsdaten,
• wobei mindestens einer der Schritte - die Erzeugung des Registrierungsattributs, die Anwendung der Hash-Funktion, die digitale Signatur, die Markierung und die Durchführung der Maßnahmen - nur dann durchgeführt wird, wenn die zu registrierende Person und die Referenzperson übereinstimmen,
• eine Kontrollphase, die folgende Schritte umfasst:
• Erhalten von Testdaten, die Folgendes umfassen:
• ein Testbild (I'), das eine zu prüfende Person zeigt, und
• ein signiertes Test-Kondensat (SH'),
• ein markiertes Testattribut,
• Überprüfung der Signatur des signierten Testkondensats (SH') mithilfe eines öffentlichen Schlüssels (PK), der mit dem privaten Schlüssel ein asymmetrisches Schlüsselpaar bildet,
• Anwenden einer zur Markierung ergänzenden Verarbeitung auf das markierte Testattribut, anhand derer sich ableiten lässt, ob das markierte Testattribut mit dem Markierungsschlüssel markiert wurde oder nicht,
• Anwendung (210) der Hash-Funktion (F) auf das Probenbild (I'), um ein weiteres Proben-Hash (H2) zu erzeugen,
• Überprüfung (212) einer Übereinstimmung zwischen dem signierten Prüfkondensat und dem anderen Prüfkondensat,
• Überprüfung des markierten Probedruckattributs, um festzustellen, ob das markierte Probedruckattribut Informationen enthält, die eine Zugangsbedingung für die Website erfüllen oder nicht,
• Erzeugung eines Prüfergebnisses, das angibt, dass:
• ein Absender der Testdaten nur dann das Recht hat, auf die Website zuzugreifen, wenn die folgenden Bedingungen erfüllt sind:
• die Signaturprüfung ergibt, dass das signierte Test-Digest mit dem privaten Schlüssel signiert wurde,
• die weitere Verarbeitung ergibt, dass das markierte Prüfattribut mit dem Markierungsschlüssel markiert wurde,
• die Überprüfung des markierten Prüfattributs ergibt, dass das markierte Prüfattribut Informationen enthält, die die Zugangsbedingung für die Website erfüllen, und
• die Übereinstimmungsprüfung ergibt, dass das signierte Prüf-Hash und das andere Prüf-Hash übereinstimmen,
• andernfalls hat der Absender der Prüfdaten kein Recht auf Zugriff auf die Website.

3. Verfahren nach dem vorstehenden Anspruch, wobei:
• die Markierung eine Verschlüsselung ist und die ergänzende Verarbeitung eine Entschlüsselung ist, oder
• die Markierung eine digitale Signatur ist und die ergänzende Verarbeitung eine Überprüfung der digitalen Signatur ist.

4. Verfahren nach einem der vorstehenden Ansprüche, wobei es sich bei dem Hash um einen perzeptuellen Hash handelt.

5. Verfahren nach einem der vorstehenden Ansprüche, wobei die Schritte die Erzeugung (108) eines Registrierungs-Barcodes (C) umfassen, der das signierte Registrierungs-Kondensat (SH) darstellt.

6. Verfahren nach einem der vorstehenden Ansprüche, wobei
• die Testdaten ein Testvideo (V) umfassen,
• der Prüfschritt die folgenden Schritte umfasst:
• Überprüfung, ob sich eine lebende Person im Testvideo (V) befindet,
• falls eine lebende Person im Testvideo (V) vorhanden ist, Erhalten des Testbildes aus dem Testvideo (V).

7. Verfahren nach dem vorstehenden Anspruch, umfassend einen Schritt zum:
• Überprüfung einer Übereinstimmung zwischen der lebenden Person und der zu kontrollierenden Person anhand des Testbildes, wobei das erzeugte Kontrollergebnis anzeigt, dass der Absender der Testdaten nicht berechtigt ist, den Standort zu betreten, wenn die lebende Person und die zu kontrollierende Person nicht übereinstimmen.

8. Verfahren nach einem der Ansprüche 6 und 7 in ihrer Abhängigkeit von Anspruch 5, wobei die Kontrollphase ferner einen Schritt umfasst, bei dem:
• Erfassen (204) eines Test-Barcodes (CC) im Testvideo (V), der das signierte Test-Kondensat darstellt.

9. Verfahren nach einem der vorstehenden Ansprüche, wobei:
• die Prüfphase von einem Prüfserver durchgeführt wird,
• Wenn das Prüfergebnis anzeigt, dass der Absender der Testdaten berechtigt ist, auf die Website zuzugreifen, wird das Prüfergebnis an einen vom Prüfserver getrennten Website-Zugriffsserver übermittelt, sodass der Website-Zugriffsserver eine vom Absender der Testdaten stammende Anfrage zum Zugriff auf die Website akzeptiert.

10. Verfahren nach dem vorstehenden Anspruch, wobei die Testdaten vom Kontrollserver ohne Umweg über den Zugriffsserver abgerufen werden.

11. Verfahren nach einem der Ansprüche 9 und 10, wobei die
Prüfphase die folgenden Schritte umfasst:
• Hashing (214) einer vom signierten Test-Kondensat abhängigen Größe und eines Werts einer Variablen, um einen Fingerabdruck (a) zu erzeugen,
• Senden (216) des Fingerabdrucks (a) an den Server für den Zugriff auf die Website;
• Empfang eines vom Server für den Zugriff auf die Website ausgehend von des Fingerabdrucks (a) generiert wurde,
• Feststellung, ob die Herausforderungsdaten (B) eine Gültigkeitsbedingung erfüllen oder nicht,
falls die Herausforderungsdaten (B) die Gültigkeitsbedingung erfüllen, digitale Signatur der Herausforderungsdaten mit Hilfe eines zweiten privaten Schlüssels, um signierte Herausforderungsdaten (SB) zu erzeugen,
• Wenn das Prüfergebnis anzeigt, dass der Absender der Herausforderungsdaten berechtigt ist, , auf die Website zuzugreifen, Senden der signierten Herausforderungsdaten (SB) an den Zugriffsserver, wobei der Zugriffsserver so konfiguriert ist, dass er:
• die Gültigkeit der signierten Herausforderungsdaten (SB) mithilfe eines zweiten öffentlichen Schlüssels zu überprüfen, wobei der zweite private Schlüssel und der zweite öffentliche Schlüssel ein zweites asymmetrisches Schlüsselpaar bilden,
• falls sich die signierten Herausforderungsdaten (SB) als gültig erweisen, Annahme eines Antrags auf Zugriff auf die Website, der vom Absender der Testdaten stammt.

12. Verfahren nach dem vorstehenden Anspruch, wobei die Variable eine Zeitvariable ist.

13. Verfahren nach einem der Ansprüche 11 und 12, wobei der Zugriffsserver so konfiguriert ist, dass er die Herausforderungsdaten (B) durch Anwendung einer überprüfbaren Zufallsfunktion auf den Fingerabdruck (a) erzeugt.

14. Verfahren nach einem der vorstehenden Ansprüche, wobei die Zugangsbedingung zur Website eine Altersbedingung umfasst, beispielsweise eine Volljährigkeitsbedingung.

15. Computerprogrammprodukt, das Programmcodeanweisungen zur Ausführung der Schritte des Verfahrens gemäß einem der vorstehenden Ansprüche umfasst, wenn dieses Programm von mindestens einem Prozessor ausgeführt wird.

## Claims

1. A method for controlling access to a site, the method being computer-implemented and comprising:
• an enrolment phase comprising the steps of:
• obtaining (100) enrolment data comprising:
• an enrolment image (I) showing an individual to be enrolled,
• a reference image (RI) showing:
• a photograph appearing on an identity document, the photograph showing a reference individual,
• information contained on the identity document and relating to the reference individual,
• verifying (102) whether the individual to be enrolled matches the reference individual on the basis of the enrolment image (I) and the reference image (RI),
• analysing (104) the information shown in the reference image (RI), so as to determine whether or not the information satisfies a condition for access to the site,
• applying (106) a hash function (F) to the enrolment image (I) to produce an enrolment hash (H),
• digitally signing the enrolment digest (H) using a private key (SK), thereby producing a signed enrolment digest (SH),
• implementing measures to communicate the signed enrolment digest (SH) to a sender of the enrolment data,
• wherein at least one of the following steps-applying the hash function, digital signing and implementing the measures-is carried out only if the following conditions are met:
• verification reveals that the individual to be enrolled and the reference individual match, and
• the analysis reveals that the information satisfies the condition for access to the site,
• a verification phase comprising the steps of:
• obtaining test data comprising:
• a test image (I') showing an individual to be verified, and
• a signed challenge digest (SH'),
• using a public key (PK) forming an asymmetric key pair with the private key, verifying the signature of the signed test digest (SH'),
• applying (210) the hash function (F) to the test image (I') so as to produce another test digest (H'),
• verifying (212) whether the signed proof digest matches the other proof digest,
• generating a verification result indicating that:
• a sender of the proof data is authorised to access the site, only if the following conditions are met:
• the signature verification reveals that the signed test digest was signed with the private key,
• the consistency check reveals that the signed test digest and the other test digest match,
• otherwise, the sender of the challenge data is not authorised to access the site.

2. A method for controlling access to a site, the method being computer-implemented and comprising:
• an enrolment phase comprising the steps of:
• obtaining (100) enrolment data comprising:
• an enrolment image (I) showing an individual to be enrolled,
• a reference image (RI) showing:
• a photograph appearing on an identity document, the photograph showing a reference individual,
• information contained on the identity document and relating to the reference individual,
• verifying (102) a match between the individual to be enrolled and the reference individual based on the enrolment image (I) and the reference image (RI),
• generating (105) an enrolment attribute containing the information shown in the reference image (RI),
• applying (106) a hash function (F) to the enrolment image (I) to produce an enrolment hash (H),
• digitally signing the enrolment hash (H) using a private key (SK), thereby producing a signed enrolment hash (SH),
• tagging the enrolment attribute using a tagging key, thereby producing a tagged enrolment attribute,
• implementing measures to communicate the signed enrolment digest (SH) and the marked enrolment attribute to a sender of the enrolment data,
• wherein at least one of the following steps-generating the enrolment attribute, applying the hash function, digital signing, tagging and implementing the measures-is carried out only if the individual to be enrolled and the reference individual match,
• a verification phase comprising the steps of:
• obtaining test data comprising:
• a test image (I') showing a subject to be assessed, and
• a signed trial digest (SH'),
• a marked proof attribute,
• using a public key (PK) forming an asymmetric key pair with the private key, verification of the signature on the signed proof digest (SH'),
• applying to the marked proof attribute a processing operation complementary to the marking process, enabling it to be determined whether or not the marked proof attribute was marked using the marking key,
• applying (210) the hash function (F) to the proof image (I') so as to produce another proof digest (H2),
• verifying (212) whether the signed proof digest matches the other proof digest,
• verifying the marked proof attribute, so as to determine whether or not the marked proof attribute contains information that satisfies a site access condition,
• generating a verification result indicating that:
• a sender of the proof data is authorised to access the site, only if the following conditions are met:
• the signature verification reveals that the signed proof digest was signed using the private key,
• further processing reveals that the marked proof attribute has been marked using the marking key,
• verification of the marked proof attribute reveals that the marked proof attribute contains information that satisfies the condition for access to the site, and
• the correspondence check reveals that the signed proof digest and the other proof digest match,
• otherwise, the sender of the proof data is not authorised to access the site.

3. A method according to the preceding claim, wherein:
• the marking is an encryption, and the complementary processing is a decryption, or
• the marking is a digital signature, and the complementary processing is a digital signature verification.

4. A method according to any of the preceding claims, wherein the hash is a perceptual hash.

5. A method according to any of the preceding claims, wherein the steps comprise generating (108) an enrolment barcode (C) representing the signed enrolment digest (SH).

6. A method according to any of the preceding claims, wherein
• The test data comprises a test video (V),
• the verification phase comprises the following steps:
• checking for the presence of a living individual in the test video (V),
• if a living individual is present in the test video (V), obtaining the test image from the test video (V).

7. A method according to the preceding claim, comprising a step of:
• verifying whether the living individual matches the individual to be verified on the basis of the test image, wherein the generated verification result indicates that the sender of the test data is not authorised to access the site if the living individual and the individual to be verified do not match.

8. A method according to any one of claims 6 and 7 as dependent on claim 5, wherein the verification phase further comprises a step of:
• detecting (204) in the test video (V) a test barcode (CC) representing the signed test digest.

9. A method according to any of the preceding claims, wherein:
• The verification phase is carried out by a verification server,
• If the verification result indicates that the sender of the proof data is authorised to access the site, the verification result is transmitted to a site access server separate from the verification server, so that the site access server accepts a request for access to the site from the sender of the proof data.

10. A method according to the preceding claim, wherein the test data is obtained by the control server without passing through the access server.

11. A method according to any one of claims 9 and 10, wherein the comprises the following steps:
• hashing (214) of a value dependent on the signed proof digest and a value of a variable, so as to produce a hash (a),
• sending (216) the fingerprint (a) to the site access server;
• receiving a challenge (B) generated by the site access server from 10 the fingerprint (a),
• determining whether or not the challenge data (B) satisfies a validity condition,
if the challenge data (B) satisfies the validity condition, digitally signing the challenge data using a second private key, so as to produce signed challenge data (SB),
• If the verification result indicates that the sender of the challenge data is authorised to access the site, sending the signed challenge data (SB) to the access server, the access server being configured to:
• verify the validity of the signed challenge data (SB) using a second public key, the second private key and the second public key forming a second pair of asymmetric keys,
• if the signed challenge data (SB) is found to be valid, accepting a request for access to the site from the sender of the challenge data.

12. A method according to the preceding claim, wherein the variable is a time variable.

13. A method according to any one of claims 11 and 12, wherein the access server is configured to generate the challenge data (B) by applying a verifiable random function to the fingerprint (a).

14. A method according to any of the preceding claims, wherein the condition for access to the site comprises an age condition, for example a condition relating to the age of majority.

15. A computer program product comprising program code instructions for carrying out the steps of the method according to one of the preceding claims, when that program is executed by at least one processor.
